# EUROPÄISCHE PATENTSCHRIFT

(11) **EP 2 384 805 B1**
(45) Veröffentlichungstag und Bekanntmachung des Hinweises auf die Patenterteilung: **23.05.2012**
(21) Anmeldenummer: 11003577.1
(22) Anmeldetag: 02.05.2011
(51) Int. Cl.: B01D 45/12, F02C 6/00, B01D 45/14

(54) **Zentrifugal-Ölabscheider für ein Flugzeugtriebwerk**
Centrifugal oil separator for an aircraft engine
Séparateur d'huile centrifuge pour un moteur d'aéronef

(30) Priorität: 06.05.2010 DE 102010019604
(43) Veröffentlichungstag der Anmeldung: 09.11.2011
(73) Patentinhaber: Rolls-Royce Deutschland Ltd & Co KG, 15827 Blankenfelde-Mahlow (DE)
(72) Erfinder: Angst, Robert, Dr., 13347 Berlin (DE)
(74) Vertreter: Weber, Joachim

(56) Entgegenhaltungen:
- EP-A2- 1 297 879
- DE-A1- 3 605 619
- DE-A1-102006 058 343
- DE-C2- 2 604 180

## Beschreibung

Die Erfindung betrifft einen Zentrifugal-Ölabscheider für ein Flugzeugtriebwerk zur Reinigung der mit Ölpartikeln vermischten Entlüftungsluft, der einen rotierenden Hohlkörper mit einer in diesem angebrachten Metallschaumstruktur und mindestens einer stromauf der Metallschaumstruktur angeordneten Hochspannungssprühelektrode umfasst.

Zur Vermeidung eines erhöhten Luftdrucks im Öltank, dem Getriebe und den Lagerkammern ist in das Schmiersystem eines Triebwerks eine Entlüftung integriert. Die von den Lagerkammern und dem Getriebe des Flugzeugtriebwerks abgeführte Luft enthält jedoch Ölpartikel, die vor der Weiterleitung in die Atmosphäre möglichst vollständig aus dem Luftstrom abgetrennt werden müssen, um einerseits die Ölverluste und die nachteiligen Folgen eines hohen Ölverbrauchs gering zu halten und andererseits die ästhetisch negativen Wirkungen von nach außen abströmender Luft mit hohem Ölanteil zu minimieren.

Zum Abtrennen des Ölanteils in der Luft werden auf der Wirkung der Zentrifugalkraft beruhende Ölabscheider eingesetzt, deren Wirkung durch eine in den Zentrifugal-Ölabscheider integrierte und mit diesem rotierende Metallschaumstruktur noch verbessert werden kann.

Zur weiteren Erhöhung der Wirkung der Metallschaumstruktur auf den Grad der Abscheidung schlägt die DE 102006058343A1 stromauf der Metallschaumstruktur die Anordnung mindestens einer Hochspannungssprühelektrode vor. Durch den auf den Hochspannungssprühelektroden vorliegenden Ladungsüberschuß werden die Luftmoleküle negativ aufgeladen. Dieser Ladungsüberschuss wird an die Ölpartikel abgegeben, die sich aufgrund der elektrostatischen Anziehung an die Oberfläche der eine geringere Ladung aufweisenden - geerdeten - Metallschaumstruktur anlegen, so dass auch kleine Ölpartikel mit geringer Masse an die Oberflächen der Metallschaumstruktur angelegt und aus dem Luftstrom abgetrennt werden.

Aus der DE 36 05 619 A1 ist ein Zentrifugal-Ölabscheider gemäß dem Oberbegriff des Anspruches 1 vorbekannt, bei welchem die Metallschaumstruktur in eine hohl ausgebildete Triebwerkswelle integriert ist.

Die bekannten Zentrifugal-Ölabscheider der oben erwähnten Art sind als separat angeordnete Aggregate ausgebildet und daher wegen des dadurch bedingten Gewichts und des Platzbedarfs nachteilig.

Der Erfindung liegt die Aufgabe zugrunde, einen Zentrifugal-Ölabscheider für ein Flugzeugtriebwerk so auszubilden, dass bei geringem Raum- und Gewichtsaufwand ein hoher Abscheidegrad gewährleistet ist.

Erfindungsgemäß wird die Aufgabe mit einem gemäß den Merkmalen des Patentanspruchs 1 ausgebildeten Zentrifugal-Ölabscheider gelöst.

Vorteilhafte Ausgestaltungen der Erfindung sind Gegenstand der Unteransprüche.

Der Kern der Erfindung besteht darin, dass ein mit einer Metallschaumstruktur und mindestens einer stromauf der Metallschaumstruktur angeordneten Hochspannungssprühelektrode ausgebildeter Zentrifugal-Ölabscheider Bestand teil einer hohl ausgebildeten Triebwerkswelle ist, indem die Metallschaumstruktur und die Hochspannungssprühelektrode(n) in die Triebwerkswelle integriert sind und die Energieübertragung zu den Hochspannungssprühelektroden transformatorisch erfolgt. Mit einem derart platzsparend in eine Triebwerkswelle eingebundenen Zentrifugal-Ölabscheider kann trotz - insbesondere im Bereich der

Triebwerksachse - geringer Zentrifugalkräfte ein hoher Grad der Ölabscheidung erreicht werden, so dass ein geringer Ölverbrauch gewährleistet ist und keine - auch unter ästhetischen Gesichtspunkten unerwünschte - mit Öl verschmutzte Luft in die Atmosphäre gelangt.

In weiterer Ausbildung der Erfindung ist zur transformatorischen Energieübertragung am Außenumfang der Triebwerkswelle eine diese konzentrisch umschließende und mit der Triebwerkswelle rotierende Nehmerspule angebracht, die konzentrisch von einer stationär angeordneten Geberspule umgeben ist. Die Nehmerspule ist über eine Verbindungsleitung an eine mit den Hochspannungssprühelektroden verbundene, in der Triebwerkswelle angeordnete Gleichrichter- und Hochspannungsgenerator-Einheit angeschlossen

In Ausgestaltung der Erfindung ist die Metallschaumstruktur ein unter dem Handelsnamen Retimet® bekanntes Erzeugnis.

Gemäß einem weiteren Merkmal der Erfindung ist die Metallschaumstruktur über metallische Welle und Lager geerdet.

In weiterer Ausbildung der Erfindung ist am Außenumfang der Metallschaumstruktur ein mit der Triebwerkswelle verbundenes Auffanggehäuse zur Aufnahme und Rückführung des abgeschiedenen Öls in einen Öltank vorgesehen.

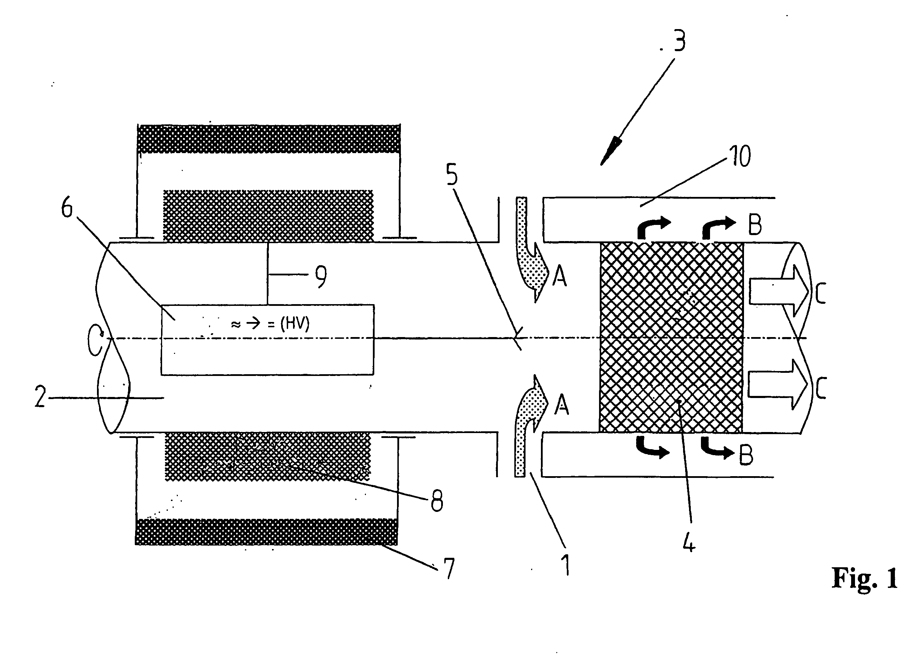

Ein Ausführungsbeispiel der Erfindung wird anhand der Zeichnung, in deren einziger Figur ein in eine Triebwerkswelle integrierter Zentrifugal-Ölabscheider schematisch dargestellt ist, näher erläutert.

Wie die Zeichnung zeigt, wird gemäß den Pfeilen A die von den Lagerkammern abgeführte, mit Ölpartikeln vermischte Luft über einen Lufteinlass 1 in einen in eine hohl ausgebildete Triebwerkswelle 2 integrierten Zentrifugal-Ölabscheider 3 eingebracht. Der Zentrifugal-Ölabscheider 3 umfasst eine in der Triebwerkswelle 2 fest angeordnete und mit dieser rotierende, unter dem Handelsnamen Retimet® bekannte Metallschaumstruktur 4, in die das Luft-Öl-Gemisch eintritt. Stromauf der Metallschaumstruktur 4, das heißt im Eintrittsbereich des Luft-Öl-Gemisches sind Hochspannungssprühelektroden 5 (der Einfachheit halber ist nur eine Sprühelektrode dargestellt) angeordnet, die mit einer in die Triebwerkswelle 2 integrierten und mit dieser rotierenden Gleichrichter- und Hochspannungsgenerator-Einheit 6 verbunden sind. Die Spannungsübertragung zu der Gleichrichter- und Hochspannungsgenerator-Einheit 6 erfolgt transformatorisch, und zwar mittels zwei konzentrisch am Umfang der Triebwerkswelle 2 angeordneten Spulen, das heißt einer unabhängig von der Triebwerkswelle 2 fest angeordneten Geberspule 7 (Sender) und einer am Außenumfang der Triebwerkswelle 2 befestigten und mit dieser rotierenden Nehmerspule 8 (Empfänger). Die Nehmerspule 8 ist über eine Verbindungsleitung 9 an die Gleichrichter- und Hochspannungsgenerator-Einheit 6 angeschlossen.

Das Luft-Öl-Gemisch wird an den Hochspannungssprühelektroden 5 ionisiert. Die dadurch negativ aufgeladenen Luftmoleküle geben den Ladungsüberschuss an die Öltröpfchen ab, die sich nach dem Eintreten in die - geerdete und eine geringere Ladung aufweisende - Metallschaumstruktur 4 an die Oberfläche innerhalb der Metallschaumstruktur 4 anlegen. Mit dem in die Triebwerkswelle 2 integrierten Zentrifugal-Ölabscheider 3 werden - trotz vergleichsweise geringer und in der Triebwerksachse sogar Null betragender Zentrifugalkräfte - gegenüber separat ausgebildeten Zentrifugal-Ölabscheidern dennoch hohe Abscheidungsraten erreicht, da sich selbst feinste Ölpartikel an die Oberfläche der Metallschaumstruktur 4 anlegen und aufgrund der vorhandenen Zentrifugalkräfte als Ölfilm an den Außenumfang der Metallschaumstruktur 4 gelangen. Das im Wesentlichen vollständig aus dem Luft-Öl-Gemisch abgetrennte Öl wird gemäß dem Pfeil B in einem am Außenumfang der Metallschaumstruktur 4 angebrachten Aufnahmegehäuse 10 aufgefangen und in den Öltank (nicht dargestellt) des Triebwerks zurückgeleitet.

Somit gelingt es auch bei einem raum- und gewichtssparend in die Triebwerkswelle 2 integrierten Zentrifugal-Ölabscheider mit transformatorischer Energieübertragung zu den Hochspannungssprühelektroden den größten Teil des mit der Lagerluft ausgetragenen Öls wieder zu nutzen und saubere, weitestgehend ölfreie Luft gemäß dem Pfeil C in die Atmosphäre abzuführen.

### Bezugszeichenliste

- 1: Lufteinlass
- 2: Triebwerkswelle
- 3: Zentrifugal-Ölabscheider
- 4: Metallschaumstruktur (Retimet®)
- 5: Hochspannungssprühelektrode
- 6: Gleichrichter- und Hochspannungsgenerator- Einheit
- 7: Geberspule (Sender)
- 8: Nehmerspule (Empfänger)
- 9: Verbindungsleitung
- 10: Aufnahmegehäuse
- Pfeil A: eintretendes Luft-Öl-Gemisch
- Pfeil B: abgetrenntes Öl
- Pfeil C: gereinigte Luft

## Patentansprüche

1. Zentrifugal-Ölabscheider für ein Flugzeugtriebwerk zur Reinigung der mit Ölpartikeln vermischten Entlüftungsluft, der einen rotierenden Hohlkörper mit einer in diesem angebrachten Metallschaumstruktur (4) und mindestens einer stromauf der Metallschaumstruktur (4) angeordneten Hochspannungssprühelektrode (5) umfasst, wobei die Metallschaumstruktur (4) in eine hohl ausgebildete Triebwerkswelle (2) integriert ist, **dadurch gekennzeichnet, dass** die Hochspannungssprühelektrode(n) (5) in die Triebwerkswelle (2) integriert ist, wobei die Energieübertragung zu den Hochspannungssprühelektroden (5) transformatorisch erfolgt.

2. Zentrifugal-Ölabscheider nach Anspruch 1, **dadurch gekennzeichnet, dass** zur transformatorischen Energieübertragung eine den Außenumfang der Triebwerkswelle (2) konzentrisch umschließende und mit dieser rotierende Nehmerspule (8) angebracht ist, die konzentrisch von einer stationär angeordneten Geberspule (7) umgeben ist, wobei die Nehmerspule (8) über eine Verbindungsleitung (9) an eine mit den Hochspannungssprühelektroden (5) verbundene Gleichrichter- und Hochspannungsgenerator-Einheit (6) angeschlossen ist.

3. Zentrifugal-Ölabscheider nach Anspruch 1, **dadurch gekennzeichnet, dass** die Metallschaumstruktur (4) geerdet ist.

4. Zentrifugal-Ölabscheider nach Anspruch 1, **dadurch gekennzeichnet, dass** am Außenumfang der Metallschaumstruktur (4) ein mit der Triebwerkswelle (2) verbundenes Auffanggehäuse (10) zur Aufnahme und Rückführung des abgeschiedenen Öls in einen Öltank vorgesehen ist.

## Claims

1. Centrifugal oil separator for an aircraft engine for cleaning the oil particle-mixed vent air, with the oil separator including a rotating hollow body with a metallic foam structure (4) attached therein and at least one high-voltage discharge electrode (5) arranged upstream of the metallic foam structure (4), with the metallic foam structure (4) being integrated into a hollow engine shaft (2), **characterized in that** the high-voltage discharge electrode(s) (5) is (are) integrated into the engine shaft (2) and energy transmission to the high-voltage discharge electrodes (5) is transformatory.

2. Centrifugal oil separator in accordance with Claim 1, **characterized in that** for transformatory energy transmission a receiving coil (8) is arranged, which concentrically encloses the outer circumference of the engine shaft (2) and co-rotates with the latter and which concentrically is surrounded by a stationary transmitting coil (7), with the receiving coil (8) being connected via a connecting line (9) to a rectifier and high-voltage generator unit (6) connected to the high-voltage discharge electrodes (5).

3. Centrifugal oil separator in accordance with Claim 1, **characterized in that** the metallic foam structure (4) is earthed.

4. Centrifugal oil separator in accordance with Claim 1, **characterized in that** a collector housing (10) connected to the engine shaft (2) for collecting and returning the separated oil to an oil tank is arranged on the outer circumference of the metallic foam structure (4).

## Revendications

1. Déshuileur centrifuge pour un moteur d'avion, destiné à épurer l'air de purge mélangé à des particules d'huile, sachant que le déshuileur comprend un corps creux rotatif dans lequel est placée une structure en mousse métallique (4) et au moins une électrode d'émission à haute tension (5) disposée en amont de la structure en mousse métallique (4), que la structure en mousse métallique (4) est intégrée dans un arbre de moteur (2) creux, **caractérisé en ce que** la (les) électrode(s) d'émission à haute tension (5) est (sont) intégrée(s) dans l'arbre de moteur (2), le transfert d'énergie vers les électrodes d'émission à haute tension (5) ayant lieu par voie de transformation.

2. Déshuileur centrifuge selon la revendication n° 1, **caractérisé en ce que** pour le transfert d'énergie par voie de transformation est placée une bobine réceptrice (8) entourant concentriquement le pourtour extérieur de l'arbre de moteur (2) et tournant avec lui, et qui est entourée concentriquement par une bobine émettrice (7) placée de manière stationnaire, sachant que la bobine réceptrice (8) est raccordée par une ligne de jonction (9) à une unité (6) constituée d'un redresseur et d'une génératrice à haute tension, elle-même reliée aux électrodes d'émission à haute tension (5).

3. Déshuileur centrifuge selon la revendication n° 1, **caractérisé en ce que** la structure en mousse métallique (4) est mise à la terre.

4. Déshuileur centrifuge selon la revendication n° 1, **caractérisé en ce que** sur le pourtour extérieur de la structure en mousse métallique (4) est prévu un carter collecteur (10) relié à l'arbre de moteur (2) et destiné à recueillir l'huile extraite et à la réinjecter dans un réservoir d'huile.
